# EUROPEAN PATENT APPLICATION

(11) **EP 4 818 969 A1**
(43) Date of publication of application: **07.10.2026**
(21) Application number: 25382339.7
(22) Date of filing: 04.04.2025
(51) Int. Cl.: G06K 19/07

(54) **RFID DETECTION SYSTEM FOR POWER CABLE ACCESSORIES, A POWER CABLE ACCESSORY COMPRISING SUCH A RFID DETECTION SYSTEM**

(71) Applicant: Prysmian S.p.A., 20126 Milano (IT)
(72) Inventor: TESTA, Luigi, Barcelona (ES); BOFFI, Paolo, Lecco (IT); POGLIANI, Stefano, Cormano (IT); GARCÍA MARTÍNEZ, Daniel, L'Hospitalet de Llobregat (ES); CALVO ROJAS, Christian, L'Hospitalet de Llobregat (ES); RODRÍGUEZ PÉREZ, Laura, L'Hospitalet de Llobregat (ES)
(74) Representative: Biallo, Dario

(57) **Abstract**

RFID detection system (100) for a power cable accessory comprising:
- an enclosure (110) having an outer surface (111) configured to be attached to an inner surface of a tubular casing (220, 320) of a power cable accessory (200, 300), said enclosure (110) being made of a resin;
- an electronic processing and control unit (120) encapsulated in said enclosure (110), said electronic processing and control unit (120) being configured to realize a passive RFID tag;
- one or more sensors (130) connected to the electronic processing and control unit (120) and uncovered by the enclosure (110) thus being at least partially exposed to the environment outside said enclosure (110).

## Description

### Background of the disclosure

The present disclosure relates to a RFID detection system for power cable accessories and to a power cable accessory comprising such a RFID detection system, like for example a cable termination or a joint.

For the purposes of the present description, a power cable includes at least one cable core usually formed by an electrically conductive metal conductor covered by an insulation system in its turn usually covered by an outer protective jacket which is the outermost layer of the cable. The insulation system may be sequentially formed by an inner semiconducting layer, an intermediate insulating layer, and an outer semiconducting layer. The cable may further include a metallic shield between the outer protective jacket and the insulation system configured to ground the cable.

For the purposes of the present disclosure, by termination for power cable it is intended a device suitable to connect the power cable conductor to a bare conductor, i.e. an electrical conductor with no solid insulating system applied on it contrarily to a power cable. This termination comprises electrical connecting means between the power cable conductor and the bare conductor and electrical separation means between the outer surface of the cable and parts connected thereto, generally at ground potential, and the elements under tension, such as the bare conductor.

A termination generally comprises:
- an electric field control element, commonly named "stress member" or "stress cone" intended to be fitted to the power cable;
- an insulator intended to surround the power cable terminal portion and coupled to the electric field control element so as to at least partially surround it as well; and
- a tubular casing enclosing the above-mentioned elements and the terminal portion of the power cable.

The insulator may be a space between the cable fitted with the stress cone, optionally filled with an insulating fluid, like silicone oil, SF6 or synthetic air, or with an insulating solid, like silicone.

The insulator and the stress cone are also collectively referred to as "insulating assembly".

For the purposes of the present disclosure, by joint it is intended a device suitable to electrically connect two power cables to each other and to restore the insulation and electric field control, for example semiconducting layer/s, over the exposed junction between the conductors of the joined cables.

For example a joint may comprise an insulator and electric field control element/s (collectively also referred to as "insulating assembly") extending along a longitudinal direction X between two opposite end portion of the two cables to be joined so as to be fit over the conductors connection in an assembled configuration. Moreover, a tubular casing may be provided around the insulator and electric field control element/s as a protection against possible crushing.

In any case, cable accessories need to be monitored in order to assure the safety and the good operation of the system.

For the purposes of the present disclosure, by power cable accessory system it is intended the assembly made by an accessory and one power cable in case of a termination or two joined power cable in case of a joint on which the accessory is installed.

At this aim it is necessary to install sensor for detecting voltage, current, humidity, strain, temperature, pressure, partial discharge and so on.

US11022498B2 describes an apparatus for measuring variable in relation to a power cable accessory, including: an RFID tag, including: a sensor configured to generate a signal indicative of the variable in its environment, an antenna, and an RFID IC (RFID integrated circuit) electrically connected to the sensor and configured to process and modulate the signal generated by the sensor and transmit the modulated signal to an RFID reader via the antenna. RFID tag can be passive.

US8733664B2 describes an apparatus for supplying an RFID component with energy includes an antenna and an energy store. The energy store stores energy induced into the antenna by an alternating electromagnetic field during a first time interval. In addition, the energy store supplies the RFID component with stored energy in order to maintain its functionality during a later, second time interval if an energy induced by an alternating electromagnetic field during the later, second time interval is not sufficient for supplying the RFID component.

WO2020/052983A1 describes a cable conduit comprising at least one cable, which may be a power line, a data transmission line and/or a fibre optics line; a tube, which accommodates the cable in an interior space; and a sensor for sensing an environmental condition in the interior space of the tube, wherein the sensor comprises a wireless sender for sending measurement data to an outside of the tube, wherein the sensor is positioned in a cavity in fluid exchange with the interior space of the tube.

The cable may comprise one or more wires, which may be enclosed in a plastics cover. A passive RFID tag with sensing capabilities may be used as sensor.

The paper of Costa et al., "A Review of RFID Sensors, the New Frontier of Internet of Things" Sensors 2021, 21(9), 3138, describes a review of technological solutions for RFID sensing and their current or envisioned applications.

### Summary of the disclosure

The Applicant faced the technical problem of how to monitor over time the operative conditions of a power cable accessory system. Then, the Applicant considered to achieve this monitoring by installing sensors inside the power cable accessory system. In this regard, the Applicant thought to use sensors capable of wirelessly communicating with external terminal so as to avoid the use of signal cable going from the inside of the power cable accessory system to the outside. In this way the water tightness of the system is preserved and the installation procedures do not need to be modified to take into account a signal cable passing through the power cable accessory system. Moreover, the Applicant considered sensors that do not need to be continuously power supplied, but only when activated. In this way it is avoided the use of batteries that have limited life and would require frequent maintenance work.

Then, the Applicant thought to use a passive RFID detection system; in this way the sensors and all the system are power supplied and operates properly only when a user interrogates the RFID detection system through a RFID reader. Such a RFID detection system needs to be easily installed inside the power cable accessory system where extreme environmental conditions may occur in terms of temperature and pressure of the fluid that may fill the tubular casing of the accessory system. Then, it is necessary to install the RFID system in an enclosure that guarantee the wireless exchange of energy and signals and the protection against the water, the high temperature and more in general from the action of external agents.

The Applicant, then, thought to at least partially encapsulate the RFID detection system in an enclosure made of resin. Since the resin is capable of completely adhere to the electronic components the resin enclosure assures the protection of such components against external agents, like an insulating fluid which, in turn, may be protected against possible contamination due to electronic component failure. Moreover a resin enclosure may be easily attached to the inner surface of the tubular casing of the power cable accessory system. Then, the Applicant considered to make the enclosure by injecting the resin into a mould containing the RFID detection system components to be encapsulated.

Finally, the Applicant thought to realize one or more sealed apertures in the resin enclosure so as to allow the sensors to be in communication with the outside of the enclosure and detect the environmental conditions of such a space.

Therefore, according to a first aspect, the present disclosure relates to a RFID detection system for a power cable accessory comprising:
- an enclosure having an outer surface configured to be attached to an inner surface of a tubular casing of a power cable accessory, said enclosure being made of a resin;
- an electronic processing and control unit encapsulated in said enclosure, said electronic processing and control unit being configured to realize a passive RFID system;
- one or more sensors connected to the electronic processing and control unit and being uncovered by said enclosure thus being at least partially exposed to the environment outside said enclosure.

The outer surface of the enclosure may be convex.

In an embodiment the resin is an epoxy resin, or a silicone resin, or a polyurethane resin.

In an embodiment the RFID detection system comprises at least one board. Each board can be divided in two or more board portions connected one to the other, for example by bolts, screw, glue. At least one of the board is a printed circuit board on which electronic components of the electronic processing and control unit are mounted. At least one sensor can be mounted on the same printed circuit board on which the electronic processing and control unit is mounted, optionally together with other ancillary components. The same or another board may be provided with at least one sensor of said sensors.

In an embodiment the at least one sensor is configured for detecting an environmental parameter outside the enclosure.

In an embodiment at least one sensor of said sensors may be positioned at least partially outside the enclosure and is connected to the electronic processing and control unit through a signal cable passing through a respective aperture of said enclosure.

According to a second aspect the present disclosure relates to a power cable accessory comprising:
- an insulating assembly comprising an insulator and an electric field control element adapted to be fitted to one power cable or two joined power cables;
- a tubular casing adapted to house the insulating assembly;
- a RFID detection system according to the above embodiments wherein the enclosure is coupled to the tubular casing.

In an embodiment the tubular casing is coupled to a metallic portion and the enclosure of the RFID detection system is positioned in proximity of and detached from said metallic portion.

In an embodiment the power cable accessory is a termination, the tubular casing is made of insulating material, the insulator, e.g. in form of an insulating fluid, is provided between the stress cone and the tubular casing, the metallic portion is a metallic base supporting element, and the enclosure is positioned between the metallic base supporting element and the stress cone.

In another embodiment, the power cable accessory is a joint where the tubular casing is made of insulating material and is coupled, at each end, a metallic portion surrounding the power cable.

For the purpose of the present description and of the claims that follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Also, the terms "a" and "an" are employed to describe elements and components of the disclosure. This is done merely for convenience and to give a general sense of the disclosure. This description should be read to include one or at least one, and the singular also includes the plural unless it is obvious that it is meant otherwise.

As "insulating material" it is meant a material having a conductivity lower than 10⁻¹² S/m.

As "semiconductive material" it is meant a material having a conductivity of from 10⁻² and 100 S/m.

### Brief description of the drawings

Further characteristics will be apparent from the detailed description given hereinafter with reference to the accompanying drawings, in which:
- Figure 1A-1E are, views, respectively, perspective, of the bottom side, of the major lateral side, of the top side and of the minor lateral side of a RFID detection system according to the present disclosure;
- Figures 2A-2C are schematic perspective views representing the steps of the process for making the RFID detection system according to the present disclosure;
- Figure 3 is a schematic perspective view of a printed circuit board and of a board included in the RFID system according to the present disclosure;
- Figure 4 is a schematic section view of a termination according to the present disclosure;
- Figure 5 is a schematic section view of a joint according to the present disclosure.

### Detailed description of some embodiments

With reference to the figures, a RFID detection system 100 for a power cable accessory according to the present disclosure is schematically represented.

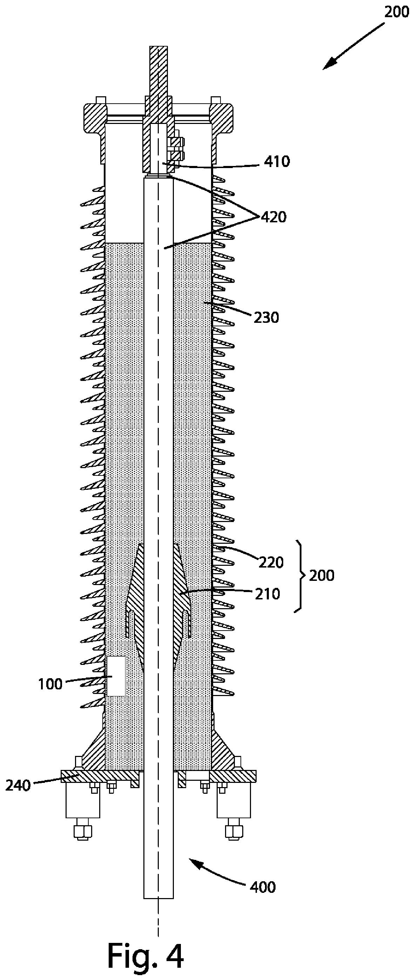

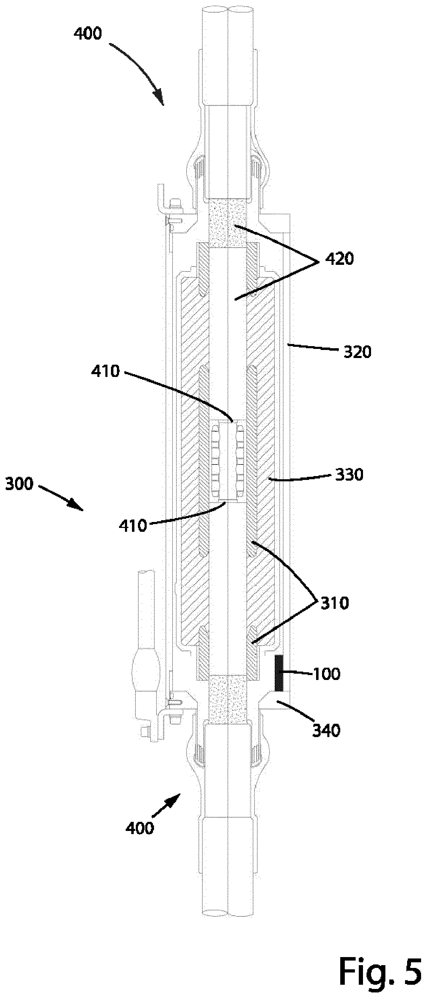

In particular, the power cable accessory 200, 300 may be a termination 200 or a joint 300, as from Figures 4 and 5.

One or two joined power cables 400 and the power cable accessory 200, 300 applied to such one or two joined power cables make part of a power cable accessory system, according to the present disclosure.

Each power cable 400 comprises at least one electric conductor 410 and a cable insulation system 420 surrounding the at least one electric conductor. The cable insulation system 420 may comprise a cable inner semiconductive layer surrounding and in contact with the electric conductor, a cable insulating layer, surrounding and in contact with the respective inner semiconductive layer, and a cable outer semiconductive layer, surrounding and in contact with the respective insulating layer. Around to the outer semiconductive layer an outer protective sheath is provided which is considered the outermost layer of the cable. In many applications, the power cable includes a metallic shield (not illustrated) between the outer protective sheath and the insulation system 420 configured to ground the cable.

The power cable accessory 200, 300 according to the present disclosure comprises:
- an insulating assembly comprising an insulator 230, 330 and an electric field control element 210, 310 adapted to be fitted to one power cable or two joined power cables 400;
- a tubular casing 220, 320 adapted to house the insulating assembly;
- the RFID detection system 100 coupled to the tubular casing 220, 320.

The tubular casing 220, 320 may be made of an insulating material and is coupled to a metallic portion 240, 340 at one/each longitudinal end fitted on a power cable 400.

With reference to the figures, the RFID detection system 100 comprises an enclosure 110 made of a resin and having an outer surface 111 configured to be attached to an inner surface of the tubular casing 220, 320 of the power cable accessory assembly 200, 300.

The enclosure 110 may be made with an epoxy resin, or a silicone resin, or a polyurethane resin.

More in general the enclosure 110 is made of a resin that can be effectively attached to the tubular casing material and is chemically inert with respect to the fluid optionally present in the tubular casing.

In an embodiment the outer surface 111 has a convex portion. The outer surface 111 of the enclosure 110 may be convex and may have a curvature radius that is complementary with respect to the curvature radius of the inner surface of the tubular casing 220, 320.

In the power cable accessory assembly 200, 300 the enclosure 110 is coupled to the inner surface of the tubular casing 220, 320.

The RFID detection system 100 comprises also an electronic processing and control unit 120 that is encapsulated in the enclosure 110 and is configured to realize a passive RFID system, and one or more sensors 130 connected to the electronic processing and control unit 120 and uncovered by the enclosure thus being at least partially exposed to the environment outside of the enclosure.

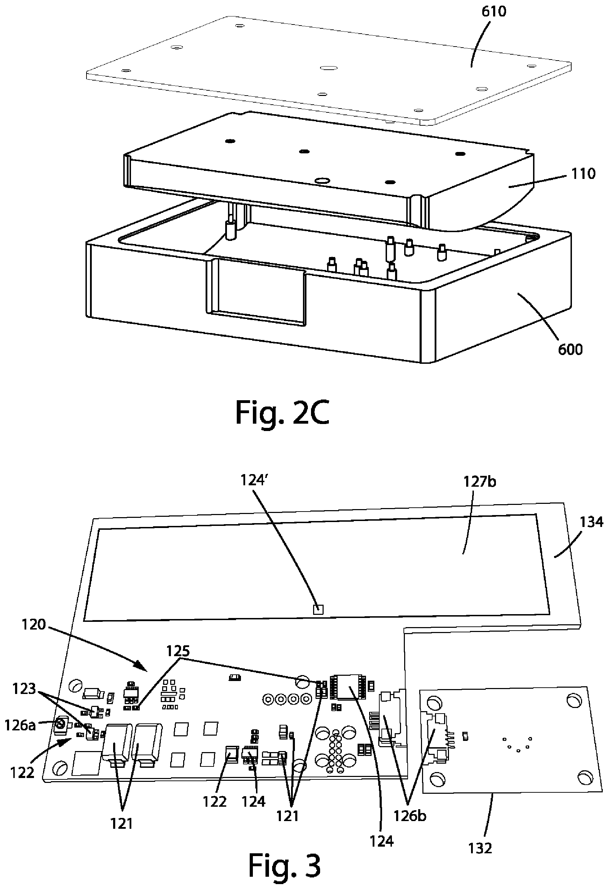

In particular the electronic processing and control unit 120 comprises a plurality of electronic components 121-126. As from Figure 3, the electronic processing and control unit 120 may comprise capacitor/s 121, inductor/s 122, diode/s 123, microcontroller/s 124 and resistor/s 125. In addition the electronic processing and control unit 120 comprises at least one connector 126a for an antenna cable, i.e. a cable connecting the electronic processing and control unit 120 to an antenna useful, for example, for harvesting energy as disclosed in the following. In addition the electronic processing and control unit 120 comprises at least one connector 126b for a sensor cable, i.e. a cable connecting the processing and control unit 120 to one of the sensors 130. The number of each component 121-126b may vary according to the specific application and can be designed by the skilled person. Other components may be present depending on the specific application and the skilled person choice. The RFID detection system 100 comprises at least one board 132, 133, 134. Each board can be divided in two or more board portions connected one to the other, for example by bolts, screw, glue.

In the illustrated embodiments the RFID detection system 100 comprises a first board 133, a second board 132 and a third board 134 that is a printed circuit board. The electronic processing and control unit is mounted on the printed circuit board 134.

For passive RFID system it is intended an electronic system that is configured for receiving the energy necessary for operation from the electromagnetic wave of an RFID reader, and for transmitting information data to the RFID reader in a wireless mode.

Indeed the passive RFID system 100 comprises at least one antenna 127a, 127b. The at least one antenna 127a, 127b may be mounted on a board or on a printed circuit board.

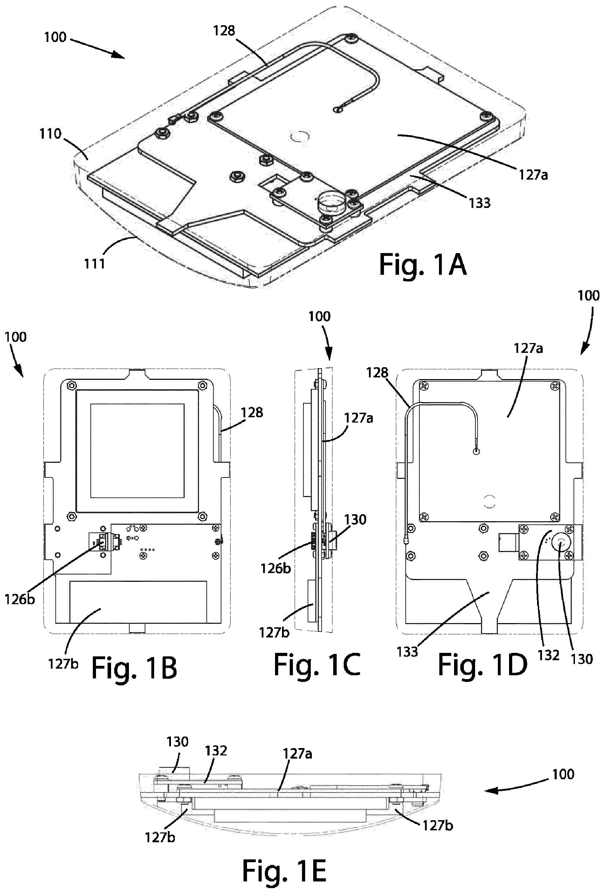

As from Figure 1C, a first antenna 127a, mounted on a first board 133, is for the energy harvesting and is connected to a cable connector 126a (visible,e.g. in Figure 1B) by a cable 128. A second antenna 127b (shown in Figures 1B and 3), mounted on the third board 134 (that is a printed circuit board) , is for wireless communication and is connected to the microcontroller 124 and to at least one tag chip 124' enabling data logging, device configuration and upgrades (for example, X-8K tag chip by Impinj). These electronic components are *per se* known in the state of the art and therefore they will not be described in more details.

The electronic processing and control unit 120 receives the power supply through the first antenna 127a when an RFID reader interrogates the RFID detection system 100. The received energy is used for power supplying all the electronic processing and control unit 120 and the at least one sensor 130.

The second antenna 127b is instead used for wireless sending the data detected by the at least one sensor 130 to the RFID reader.

The at least one sensor 130 may enable detecting environmental parameters and/or electrical parameters and/or mechanical parameters.

For example, a sensor for detecting environmental parameters may comprise a humidity sensor sub-unit and/or a pressure sensor sub-unit; a sensor for detecting electrical parameters may comprise a voltage sensor sub-unit, and/or a current sensor sub-unit, and/or a partial discharge sensor sub-unit; a sensor for detecting mechanical parameters may comprise a strain sensor sub-unit.

In the embodiment of the Figures, a sensor 130 may be mounted on the second board 132 connected to the printed circuit board 134. At least one first sensor 130 of said sensors 130 may face towards the outside of the enclosure 110 through a respective aperture 112 of said enclosure 110.

In some instance, the aperture 112 may be sealed, e.g. when the RFID detection system 100 is positioned in a cable termination 200 wherein the insulator 230 is an insulating fluid other than air. In this embodiment the at least one first sensor 130 has a surface exposed towards the outside of the enclosure 110 that may be flush with the edge of the sealed aperture 112 of the enclosure 110. In another embodiment, the at least one first sensor 130 may protrude beyond the edge of the aperture 112 of the enclosure 110.

In all of these cases the at least one sensor 130 is a sensor for detecting environmental parameters (e.g. temperature and/or pressure and/or moisture of the termination or joint) having the sensing portion that faces to or that is outside of the enclosure 110.

In another not illustrated embodiment, at least one sensor of the RFID detection system of the present disclosure may be entirely positioned outside the enclosure and connected to the electronic processing and control unit through a cable passing through a respective an aperture of the enclosure 110. Such at least one external sensor may be a sensor for detecting electrical parameters or a sensor for detecting mechanical parameters.

The power cable accessory of Figure 4 is a cable termination 200. In the cable termination 200 the insulating assembly comprises an insulator 230 in form of insulating fluid and a stress cone (electric field control element) 210. The cable termination 200 further comprises a tubular casing 220 made of insulating material and a metallic portion (or metallic base supporting element) 240.

In the embodiment shown in Figure 4, the RFID detection system 100 is positioned in contact with the tubular casing 220, in proximity of the stress cone 210 and detached from the metallic portion 240.

The power cable accessory of Figure 5 is a joint 300 mounted onto two joined power cables 400 each comprising an electric conductor 410 surrounded by an insulating system 420. No further description of the cables 400 is provided as being well known to the skilled persons. The joint 300 comprises an insulator 330 and electric field control elements 310 surrounded by a tubular casing 320 is made of insulating material. The tubular casing 320 is coupled to two metallic portions 340, each surrounding a relevant cable 400.

In the embodiment shown in Figure 5, the RFID detection system 100 is positioned in contact with the tubular casing 320, in proximity of one of the electric field control elements 310 and detached from both the metallic portions 340.

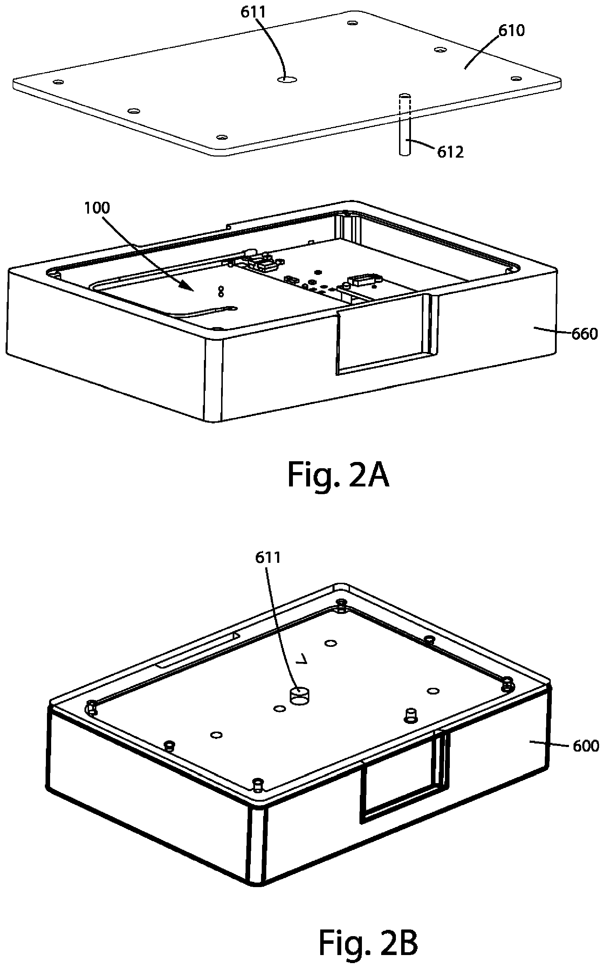

The RFID detection system 100 may be made through moulding technique like for example illustrated in Figures 2A-2C. In a first step, like for example in Figure 2A, the RFID detection system 100 is placed inside a mould 600 that is, then, closed with a cover 610 with at least one opening 611 and at least one hollow rod 612 provided to be in connection with the at least one sensor 130. The at least one rod 612 prevents the resin to cover the sensor and leave it in communication with the outside of the enclosure 110 at the end of the manufacturing process.

The closed mould 600 is, then, filled with a resin through the at least one opening 611. The resin embeds the at least one board 132, 133, 134 and, after a curing step, forms the enclosure 110 with the encapsulated that can be extracted from the mould 600.

## Claims

1. RFID detection system (100) for a power cable accessory comprising:
- an enclosure (110) having an outer surface (111) configured to be attached to an inner surface of a tubular casing (220, 320) of a power cable accessory (200, 300), said enclosure (110) being made of a resin;
- an electronic processing and control unit (120) encapsulated in said enclosure (110), said electronic processing and control unit (120) being configured to realize a passive RFID tag; and
- one or more sensors (130) connected to the electronic processing and control unit (120) and uncovered by the enclosure (110) thus being at least partially exposed to the environment outside said enclosure (110).

2. RFID detection system (100) according to claim 1 wherein the resin is an epoxy resin, or a silicone resin, or a polyurethane resin.

3. RFID detection system (100) according to claim 1 wherein the electronic processing and control unit (120) comprises at least one board (132, 133), at least one of said boards (132, 133) is a printed circuit board () on which electronic components of the electronic processing and control unit (120) are mounted, at least one sensor (130) of said sensors (130) is mounted on the same printed circuit board ()on which the electronic processing and control unit is mounted or on another board.

4. RFID detection system (100) according to claim 3 wherein the at least one sensor (130) is configured for detecting an environmental parameter outside the enclosure (110).

5. RFID detection system (100) according to one or more of the previous claims wherein at least one sensor (130) of said sensors (130) is positioned at least partially outside the enclosure (110) and is connected to the electronic processing and control unit (120) through a signal cable passing through a respective aperture (112) of said enclosure (110).

6. Power cable accessory (200, 300) comprising:
- an insulating assembly comprising an insulator (230, 330) and an electric field control element (210, 310) adapted to be fitted to one power cable (400) or two joined power cables (400);
- a tubular casing (220, 320) adapted to house the insulating assembly; and
- a RFID detection system (100) according to one or more of the previous claims wherein the enclosure (110) is coupled to the tubular casing (220, 320).

7. Power cable accessory (200, 300) according to claim 6 wherein the tubular casing (220, 320) is coupled to a metallic portion (240, 340) and the enclosure (110) of the RFID detection system (100) is positioned in proximity of and detached from the metallic portion (240, 340).

8. Power cable accessory (200, 300) according to claim 6 or 7 wherein the power cable accessory (200) is a termination, the tubular casing is made of insulating material, the insulator being provided in form of insulating fluid between the stress cone and the tubular casing, the metallic portion being a metallic base supporting element (230) and the enclosure (110) of the RFID detection system (100) being positioned between the metallic base supporting element (230) and the stress cone (210).

9. Power cable accessory (200, 300) according to claim 7 or 6 wherein the power cable accessory assembly (300) is a joint, the tubular casing is made of insulating material and is coupled at each end a metallic portion surrounding the power cable (400).
